# EUROPEAN PATENT APPLICATION

(11) **EP 1 965 305 A1**
(43) Date of publication of application: **03.09.2008**
(21) Application number: 05820303.5
(22) Date of filing: 20.12.2005
(51) Int. Cl.: G06F 13/00

(54) **INFORMATION AUTHENTICATION GATEWAY, INFORMATION ACQUISITION SYSTEM USING THE INFORMATION AUTHENTICATION GATEWAY, AND INFORMATION ACQUISITION METHOD**

(71) Applicant: Technical Infra Logic Inc., 2-6 Kusunokicho 6-chome Chuo-ku, Kobe-shi Hyogo 650-0017 (JP)
(72) Inventor: ANO, Yukihiro, Kobe-shi, Hyogo 650-0017 (JP); TANATSUGU, Saburo, Osaka 566-0025 (JP)
(74) Representative: Betten & Resch
(86) International application number: PCT/JP2005/023311
(87) International publication number: WO 2007/072545

(57) **Abstract**

It is possible to provide an information authentication gateway used when acquiring information on an object according to hierarchical position information contained in an information code attached to the object. The information authentication gateway includes: metadata storage means for storing metadata indicating an entire hierarchical structure in which basic semantic units are shown; hierarchical position information acquisition means for reading an information code attached to an object by a reader and receiving hierarchical information included therein from a user terminal capable of transmitting/receiving information to/from the reader; information comparison means for performing a comparison to decide whether the received hierarchical position information is included in the metadata stored in the metadata storage means; and ticket issuing means used when the information comparison means indicates that the information is included, for passing information required to access a server storing the information corresponding the hierarchical position information to the user terminal.

## Description

### TECHNICAL FIELD

The present invention relates to an information authentication gateway used when acquiring information on an object based on hierarchical position information included in the information code attached to the object, to an information acquisition system using the information authentication gateway, and to an information acquisition method.

### BACKGROUND TECHNOLOGY

Currently, there are information storage systems (such as in Patent Document 1) that code and store all kinds of information, such as that on barcodes, 2D codes, and information stored in IC tags (hereinafter "information codes" ). These information codes are used in various situations in daily life such as on address labels for couriers as shown in Patent Document 2 below, and process management for factory-manufactured products as shown in Patent Document 3 below.

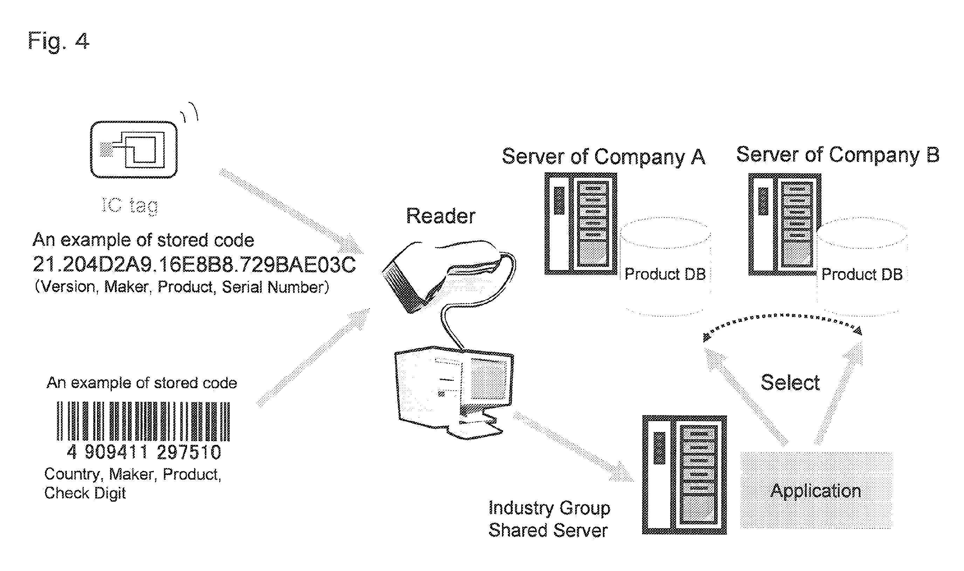

To acquire information from a server by using such information codes, information included in the code is read by a reader, and the read information is forwarded to the server of an industry group (hereinafter "Shared Server"), which then retrieves the corresponding information from the server of each company as shown in Figure 4.

Patent Document 1: Japanese Unexamined Patent Application Publication H7-254037
Patent Document 2: Japanese Unexamined Patent Application Publication 2001-272914
Patent Document 3: Japanese Unexamined Patent Application Publication 2004-102746

### DISCLOSURE OF THE INVENTION

### PROBLEMS RESOLVED BY THE INVENTION

However, in this method, it is impossible to know whether such corresponding information actually exists on the company server until the shared server searches for it based on the information passed on to the company server from the shared server.

Also, because only one unit of information indicating an object's attributes is conventionally stored in an information code, it is impossible to search all related information simultaneously from servers across companies. For example, a single product consists of multiple components. However, in many cases, these components are produced by different manufacturers. Hence, when information on the attributes of a single product, say a television set, is required, it is possible to determine the manufacturer and model number, but it is impossible to acquire the information on the attributes of each component from corresponding parts manufacturers, because only data related to the identification of the TV as a finished product is stored in the information code.

### MEANS OF RESOLVING THE PROBLEMS

The inventors therefore focused of including hierarchical position information, which shall be described later, in the information code and deploying metadata that indicate the entire configuration of hierarchical structure on the gateway. Then, whether corresponding information actualy exists or not in the company server is first determined by comparing the information based on what was read by the reader with the metadata on the gateway before a search is performed among company servers. Additionally, since the metadata manages which data are found in which server, searching across multiple servers simultaneously to acquire the information is possible.

The present invention described in Claim 1 is an information acquisition system where basic semantic units are expressed in a hierarchical structure. The system comprises an information authentication gateway for storing metadata that indicate the entire hierarchical structure, and one or more servers for storing information corresponding to the hierarchical position information included in the information code attached to an object. Basic semantic units are expressed in hierarchical structure in said information authentication gateway. The gateway comprises: a means to store metadata that indicate entire hierarchical structures; a means for acquiring hierarchical position information, included in the information code attached to an object that is scanned by a reader, from a user terminal that is capable of receiving and transmitting information with said reader; a means for comparing information to determine whether said received hierarchical position information is included or not in the metadata stored by said metadata storage means; and a means for issuing tickets to said user terminals to pass information required to access the server storing information corresponding to said hierarchical position information in the event that it is found to exist in the metadata stored in the gateway via said means for comparing information. The aformentioned server is an information acquisition system comprised of an information storage means that stores information corresponding to hierarchical position information included in the information code attached to said object, and an information retrieval means that, based on the hierarchical position information retrieved from said server, retrieves said information corresponding to hierarchical position information from said information storage means and transmits it to said server.

With the present invention, it is possible to determine whether information corresponding to the information read by the reader exists in each server before retrieving data from each server because metadata is provided in the gateway (information authentication gateway).

In the present invention, as described in Claim 2, said information acquisition system comprises of a means for receiving tickets capable of receiving ticket information mentioned earlier from said information authentication gateway, and a means to compare ticket information received from the user terminal mentioned previously with the ticket information received from the information authentication system (also mentioned earlier) to determine whether access is possible, in addition to the previously mentioned server. In cases when it is determined that access is possible from said ticket comparison method, said information retrieval means searches for information corresponding to said hierarchical position information from the previously mentioned information storage means based on the hierarchical information obtained from said user terminal, and passes the information to said user terminal.

Further, security is enhanced in the invention as described above through access authentication using ticket information.

In the invention as described in Claim 3, said information acquisition system further encrypts the information corresponding to said hierarchical position information based on said ticket information in the server information retrieval procedure before passing information to said user terminal, which in turn decodes the encrypted information received from said server based on said ticket information.

Furthermore, in the invention as described above, the encryption of information sent from the server, using ticket information, enables improved information security as well as password security because the password to decode is generated in the information authentication gateway and there is no need to send / receive password-related information between server and user terminals.

In the invention described in Claim 4, said information acquisition system is an information acquisition system wherein when said information search system receives a request for modification, removal or new registration of the information corresponding to said hierarchical position information, the system performs the process of modification, removal or new registration of the information corresponding to said hierarchical position information and passes the result to said user terminal.

Constricting this invention in this manner enables modification, removal and new registration, as well as a search for information corresponding to the hierarchical position information, and thus enhances processing capabilities.

The present invention described in Claim 5 is an information acquisition method where basic semantic units are expressed in hierarchical structure, and uses an information authentication gateway that stores metadata containing the entire hierarchical structure together with one or more servers storing information corresponding to hierarchical position information-bearing information code attached to an object. Said information authentication gateway receives the hierarchical position information contained in the information code attached to the object-and which has been read by said reader-from a user terminal that can send/receive information to/from the reader, which can read the information code attached to an object, verifying whether said received hierarchical position information is contained in said stored metadata and, if contained, passing to said user terminal the information required to access the server storing the information corresponding to said hierarchical position information. Said server is accessed from said user terminal based on the information of the server to be accessed received from said information authentication gateway, receiving said hierarchical position information from said user terminal, passing to said user terminal the information corresponding to said hierarchical position information.

It is possible to construct the information acquisition method described above in a manner by which this invention is constructed.

The present invention described in Claim 6 comprises an information acquisition method wherein an information authentication gateway further verifies whether said received hierarchical position information is contained in said stored metadata and, if contained, generates ticket information to access the server that stores the information corresponding to said hierarchical position information, passes said generated ticket information to the server, passes said generated ticket information and the information required to access such server to said user terminal, and further compares the ticket information received from said user terminal with the ticket information received from said information authentication gateway at the gateway. If it is decided to be accessible, it passes to said user terminal the information corresponding to the hierarchical position information received from said user terminal.

Furthermore, the information acquisition method invention described above enhances security through access authentication using ticket information.

The invention described in Claim 7 comprises an information acquisition method wherein the information corresponding to said hierarchical position information, based on said ticket information, is encrypted at said server when such information is passed to said user terminal, and said user terminal decodes the encrypted information it receives from said server based on said ticket information.

Furthermore, in the information acquisition method invention as described above, the encryption of information sent from the server, using ticket information, enhances information security as well as password security because the password to decode is generated in the information authentication gateway so that there is no need to send/receive password-related information between server and user terminal.

In the invention as described in Claim 8, when said information acquisition method receives a request for modification, removal or new registration of the information corresponding to the hierarchical position information from said user terminal, said server performs the requested modification, removal or new registration and passes the result to said user terminal.

Constructing this invention in this way enables the modification, removal or new registration, as well as a search for the information corresponding to the hierarchical position information, thus broadening processing capabilities.

The present invention as described in Claim 9 comprises an information authentication gateway which can send/receive data to/from one or more servers storing the information corresponding to the hierarchical position information contained in the information code attached to an object. Said information authentication gateway expresses basic semantic units in a hierarchical structure and comprises a metadata storage means to store data that indicate the entire hierarchical structure; a hierarchical position information acquisition system where information code attached to said object is read by a reader; a user terminal that can send and receive information to and from the reader to received hierarchical position information in the information code; a means to compare information to verify whether said received hierarchical position information is contained in metadata stored in said metadata storage system; and a means to issue tickets to pass to said user terminal the information required to access servers storing information corresponding to said hierarchical position information when it is contained in said information comparisons, thereby allowing said server to be accessed from said user terminal and the information corresponding to said hierarchical position information to be acquired.

It is possible to construct the information authentication gateway in the the same way as this invention is structured as in the information acquisition system described above.

In the present invention as described in Claim 10, when the previously mentioned hierarchical position information that was received is found in said metadata, said information comparison system in said information authentication gateway passes a request for issuing a ticket to said ticket issuing means, passing an error notification to said user terminal when the hierarchical position information is not included. Said ticket issuing means generates ticket information to access servers storing information corresponding to said hierarchical position information when receiving said request for issuing a ticket, passes said ticket information to the server, passes said generated ticket information and also information required to access such server to allow said server to be accessed from said user terminal after authenticating said ticket information and acquiring information corresponding to said hierarchical position information.

Furthermore, in the information authentication gateway invention as described above, access authentication using ticket information enhances security.

In the invention described in Claim 11, said information authentication gateway further includes a metadata update means to access said server storing the information corresponding to said hierarchical position information, to detect the change in hierarchical position information in such server, and to update metadata to be stored.

Furthermore, in the information acquisition gateway invention as described above, the encryption of information sent from the server using ticket information enhances information security, as well as password security, because the password to decode is generated in the information authentication gateway and there is no need to send/receive password-related information between server and user terminal.

The invention described in Claim 12 also includes said information authentication gateway wherein, when said information retrieval means receives the request for modification/removal/new registration of the information corresponding to said hierarchical position information, it executes processing for such modification/removal/new registration and passes the result to said user terminal.

The composition of this invention enables execution of processing of modification/removal/new registration, as well as a search for the information corresponding to the hierarchical position information, enhancing the process ability.

### EFFECT OF THE INVENTION

Storing metadata on the gateway and comparing it with the information read on the reader allows determination of whether the information corresponding to such information actually exists, before searching for it in each company server. Furthermore, because the metadata is used to know which information is stored in which server, it enables acquisition of the information by simultaneous retrieval from multiple servers.

### BRIEF DESCRIPTION OF THE DRAWINGS

Figure 1 shows a schematic diagram of the present invention.
Figure 2 is a configuration diagram showing an example of the system configuration for the present invention.
Figure 3 is a flowchart showing an example of the process stages.
Figure 4 is a configuration diagram showing an example of information acquisition using conventional information code.
Figure 5 is a schematic diagram showing basic semantic units.
Figure 6 is a schematic diagram showing hierarchical position information.

### EXPLANATION OF REFERENCES

1: Information acquisition system
2: Information authentication gateway
3: Servers in each company
4: User terminal
5: Reader
6: Hierarchical position information acquisition means
7: Information comparison means
8: Metadata storage means
9: Ticket issuing means
10: Metadata update means
11: Ticket receipt means
12: Ticket comparison means
13: Information retrieval means
14: Information storage means

### BEST EMBODIMENTS OF THE INVENTION

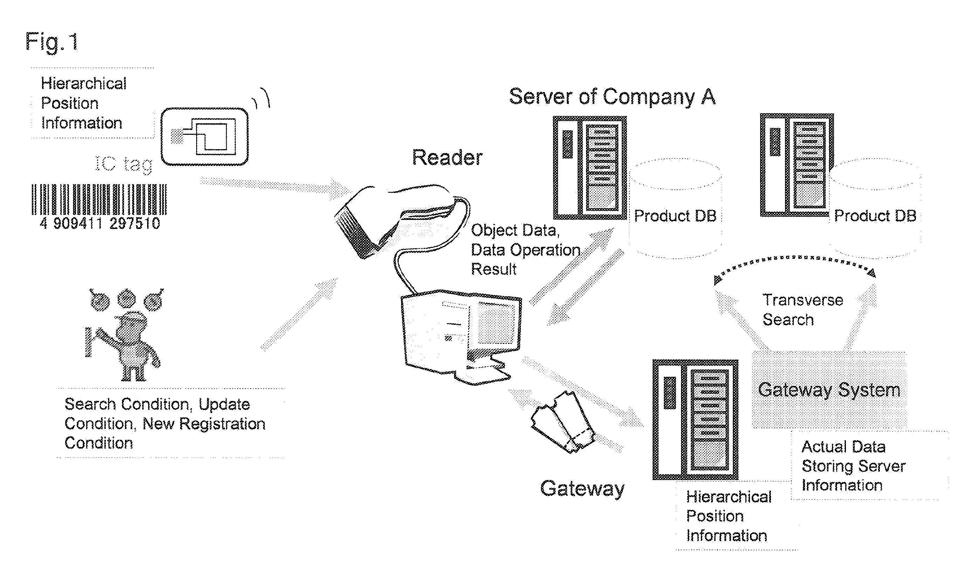

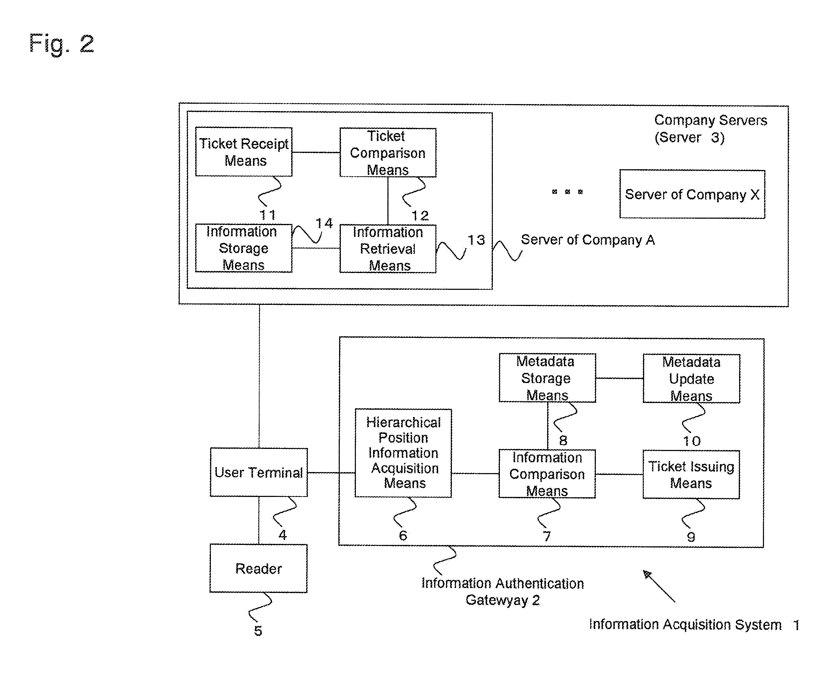

An embodiment of information acquisition by information acquisition system 1, using the information authentic gateway 2, will be described hereafter. Figure 1 shows a schematic diagram of the present invention, and Figure 2 shows an embodiment of the system configuration of the present invention.

Information acquisition system 1 comprises: information authentication gateway 2; reader 5 to read information code; user terminal 4 connected to the reader; and company server 3. User terminal 4 passes hierarchical position information read on information code to information authentication gateway 2, and acquires the information corresponding to the information read from company server 3 after the processing on information authentication gateway 2.

User terminal 4, connected to reader 5, reads the information code. Reader 5 is a device to read hierarchical position information included in the information code, such as barcode information, 2D code information and information stored in IC tags, and it passes the read hierarchical position information to user terminal 4.

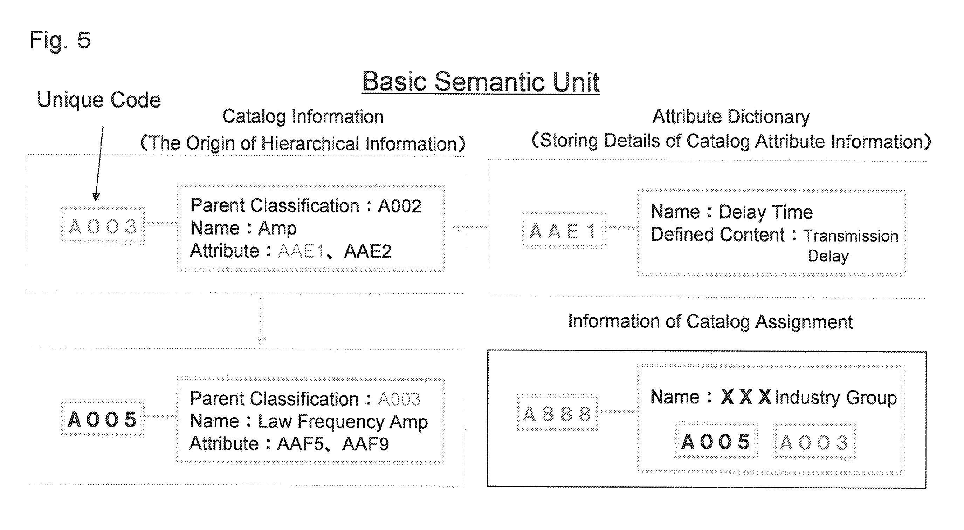

Hierarchical position information is a relational structure showing a parent-child relationship and also an attribution-inheritance relationship such as attributes of an object to which information code is attached, configured based on relational and attributional information of object-oriented basic semantic units, and describable with connecting related information. The basic semanteme comprises catalog information and attribute information as shown in Figure 5. Catalog information is original hierarchical position information and an element of information describing the object attribute, and an attribute dictionary is information containing details of catalog information. Unique code, which is assigned to the catalog information of basic semantic units, comprises: parent category showing the unique parent code of the basic semantic unit; the name describing the attribute; and the attribute. Also in the attribute dictionary where attribute of catalog information are described, the attribute name, the catalog information, definition, etc. are related.

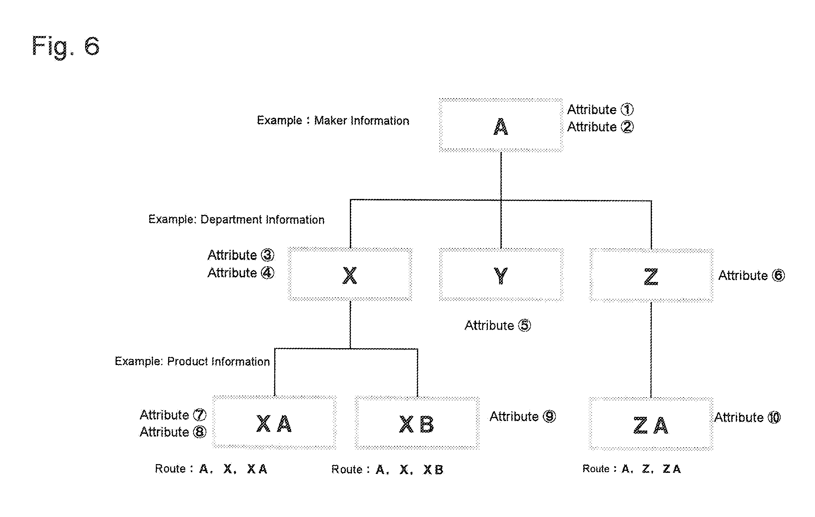

Figure 5 shows a schematic of a basic semantic unit, and Figure 6 shows a schematic of hierarchical position information comprising the basic semantic unit.

Company server 3 is, for example, a server where it is possible to search, modify or remove the information corresponding to the hierarchical position information read on the information code for every company belonging to a certain industry. Company server 3 can be for one company or for multiple companies. It needs to be comprised of one or more servers.

In the present specificiations, information corresponding to hierarchical position information refers to information related to properties of an object to which information code is attached, or to properties of components of the object (e.g. the parts that make up the object). This information has various kinds of data formats, including tabular (e.g. relational database, spreadsheet, sequential file), tree form (e.g. tree form data model), parametric (e.g. 3D CAD model), space (e.g. map data), and also data formats managing various properties, such as multidimensional, multi-hierarchical, and neuron types.

Information authentication gateway 2 comprises: hierarchical position information acquisition means 6; information comparison means 7; metadata storage means 8; ticket issuing means 9; and metadata update means 10.

Hierarchical position acquisition means 6 is a means to receive the hierarchical position information read by reader 5 on the information code from user terminal 4.

Information comparison means 7 is a means to check whether the information received via the hierarchical position information acquisition means 6 is included in the metadata stored in metadata storage means 8, to pass the request for issuing the ticket information to ticket issuing means 9 if it is included, and to pass error notification to user terminal 4 if it is not included.

Metadata storage means 8 is a means to store metadata wherein the basic semantic units are shown in a hierarchical structure, and it indicates the entire hierarchical structure. It therefore indicates where information on the basic semantic unit corresponding to a certain hierarchical position information is located in company server 3.

Ticket issuing means 9 is a means to generate ticket information (e.g. information configured with a character/number/symbol array) required for user terminal 4 to access company server 3 when it receives a request to issue a ticket from information comparison means 7, and to pass the information to user terminal 4 and to the server storing the information corresponding to the hierarchical position information among company server 3. When the ticket information is passed to user terminal 4, information on accessed destination, such as server address to be accessed, should be forwarded along with the ticket information. Information of accessed destination can be verified using information comparison means 7, based on the hierarchical position information received from user terminal 4. Information authentication gateway 2 therefore stores information on accessed destination such as the address of each company server 3, which is included in metadata.

When information corresponding to the received hierarchical position information is divided to be stored in different multiple servers among company server 3, the ticket information is passed to those servers and user terminal 4 accesses those servers. In such cases, the ticket information can be common or different for each server.

Metadata update means 10 is a means to access information storage means 14 in company server 3 regularly or irregularly, to detect changes in hierarchical position information on each server, and to update metadata stored in metadata storage means 8.

Company server 3 comprises: ticket receipt means 11; ticket comparison means 12; information retrieval means 13; and information storage means 14.

Ticket receipt means 11 of company server 3 is a means to receive ticket information generated by ticket issuing means 9 in information authentication gateway 2.

Ticket comparison means 12 is a means to compare the ticket information received via ticket receipt means 11 with the ticket information received from user terminal 4, and determine whether they match (whether access is allowed). If it is determined accessible, searching using information retreival means 13 is admitted, otherwise an error notification is passed to user terminal 4.

Information retrieval means 13 is a means to retrieve information corresponding to the hierarchical position information from information storage means 14, based on hierarchical position information received from user terminal 4, and to return the result to user terminal 4.

Information storage means 14 is a means to link and store basic semantic units of objects as a hierarchical structure and store catalog information and an attribute dictionary in the basic semantic units. These basic semantic units are stored corresponding to hierarchical position information that represents the hierarchical structure. Figure 6 is a schematic diagram of information storage means using such a hierarchical structure.

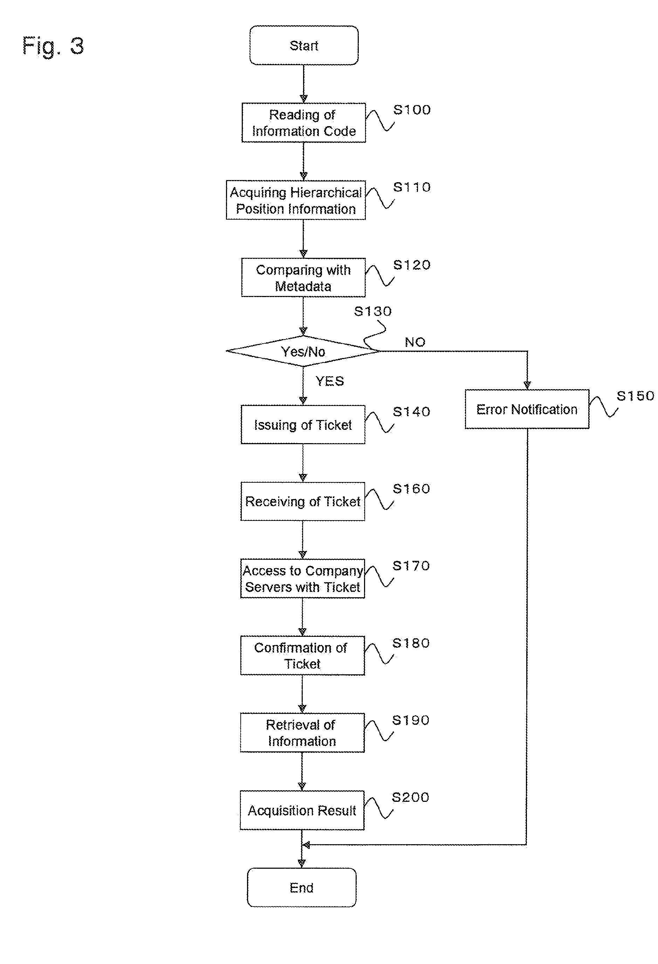

The process stages of information authentication gateway 2 according to the present invention will then be described using the flowchart in Figure 3 and the means configuration diagram in Figure 2.

The information code attached to an object stores coded hierarchical position information on the object. Users wanting to acquire attribution information, etc. on the object can read the information code using reader 5 provided on user terminal 4, and then read the hierarchical position information included in the information code. (100)

The hierarchical position information read by reader 5 is passed to information authentication gateway 2 by user terminal 4, and is received by the hierarchical position acquisition means 6 in information authentication gateway 2 (S110). This received hierarchical position information is passed to information comparison means 7, which then decides whether the received hierarchical position information is included in metadata stored in metadata storage means 8 (S120).

For example, if the received hierarchical position information is "A, X, XA" as shown in Figure 6, information comparison means 7 checks whether the hierarchical position information is included in the metadata, and if it is, passes the request for issuing a ticket to ticket issuing means 9 (S130).

Ticket issuing means 9, on receiving the request for issuing a ticket from information comparison means 7, generates ticket information required for user terminal 4 to access company server 3, and passes it to the server where the hierarchical position information is stored in company server 3 (S140). For example, if the information corresponding to the hierarchical position information "A, AX, XA" is in the server of company A in company server 3, the ticket information is passed to the server of company A.

In the above case where information corresponding to the hierarchical position information "A, X, XA" is stored in one server, the information can be divided for storage among different multiple servers. For example, it is possible to store the hierarchical position information "A, X" in the server of company A, and the information "XA" in the server of company B. In such cases, ticket issuing means 9 forwards the ticket information to both these servers.

In the following description, the case will be described where one server in company server 3 stores information corresponding to the hierarchical position information (for example, when information corresponding to hierarchical position information "A, X, XA" is stored only in the server of company A), but even when the information corresponding to the hierarchical position information is divided to be stored in different servers as described above, it is possible to process it in parallel, simultaneously, or one by one at different times from user terminal 4 to each server. In other words, when the hierarchical position information "A, X" is stored in the server of company A and the information "XA" is stored in the server of company B, the process from user terminal 4 to the server of company A (the process to acquire information corresponding to the hierarchical position information "A, X") and the process from user terminal 4 to the server of company B (the process to acquire information corresponding to the hierarchical position information "XA") are executed similarly.

When the result of comparison using information comparison means 7 in S120 shows that the received hierarchical position information is not included in metadata stored in metadata storage means 8 (S130), information comparison means 7 passes an error notification to user terminal 4 (S150). For example, if a third party fabricates false hierarchical position information, it may look as if the correct information code that includes the fabricated hierarchical position information is attached to the object, but when it is actually read, it can be determined to be fake because no corresponding hierarchical position information is found to exist in the metadata. Thus, comparing read hierarchical position information with metadata enables execution of a process resembling authentication.

Also, if particular hierarchical position information does not exist in metadata, no information corresponding to that hierarchical position information is found to exist in the company servers when search is executed based on that hierarchical position information. It is therefore possible to find mismatching hierarchical position information before executing a search in company server 3, thereby enhancing the processing speed.

In S140, on receiving ticket information from information authentication gateway 2, ticket receipt means 11 in company server 3 (the server of company A in above example) stores it temporarily (S160). This temporary storage enables ticket receipt means 11 in company server 3 (the server of company A here) to notify information authentication gateway 2 that data preparation has been completed.

The information authentication gateway 2, on receiving this notification, passes ticket information generated by ticket issuing means 9 to user terminal 4. It also passes information indicating which server should be accessed in company server 3 (address information etc. of the server of company A here) by user terminal 4. For example, it passes information like "http:// company A server address/ticket information/". As for the information indicating which server among company server 3 should be accessed, servers (company server 3) published by companies and organizations on the internet should be chosen, based on the hierarchical position information.

When user terminal 4 receives ticket information from information authentication gateway 2 (S160), it accesses company server 3 (the server of company A) storing information corresponding to the read hierarchical position information, passes the ticket information received from information authentication server 2, and makes a request for retrieving information corresponding to the hierarchical position information (S170).

Ticket comparison means 12 in the server accessed (the server of company A here) in company server 3 compares ticket information that ticket receipt means 11 receives from information authentication gateway 2 with ticket information received from user terminal 4 (S180), permits retrieval by information retrieval means 13 if it determines it to be accessible, and passes error notification to user terminal 4 otherwise.

After permitting the search, information retrieval means 13 retrieves information corresponding to the hierarchical position information (information corresponding to hierarchical position "A", hierarchical position "X", hierarchical position "XA" here) from information storage means 14, based on hierarchical position information ("A, X, XA") received from user terminal 4, and returns the result to user terminal 4 (S190).

This result can be received on user terminal 4 and displayed, enabling the user to know the attribute information attached to the object (S200).

Here, though the case is described where attribute information is searched for based on hierarchical position information included in the information code attached to a object, it is also possible for a user to enter requests for such things as modification/removal/new registration of attribute information into user terminal 4 and make information retrieval means 13 execute modification/removal/new registration of information corresponding to hierarchical position information.

Data update means 10 can access information storage means 14 in a company server 3 at pre-determined times or at times designated by the administrator of information authentication gateway 2, detect changes in hierarchical position information in each server, and store it in metadata storage means 8. This enables updating of the metadata, with the latest information every time.

Furthermore, because information authentication gateway 2 passes information indicating which server should be accessed in company server 3, and because user terminal 4 accesses servers based on this information, it is possible to access multiple servers simultaneously and acquire information corresponding to hierarchical position information.

It is also possible to use ticket information (the authentication information when company server 3 is accessed from user terminal 4) as an encryption key when the search result is sent from company server 3 to user terminal 4. In other words, after the result of information processing in information retrieval means 13 is encrypted using temporarily stored ticket information as an encryption key, it is returned to user terminal 4 as a result. User terminal 4, on receiving this encrypted information, decodes it using the ticket information received from information authentication gateway 2 as a decoying key and checks the result. This enhances security because corrupted information is returned when invalid access is attempted.

### INDUSTRIAL APPLICABILITY

By deploying metadata on a gateway, which is data indicating an entire hierarchical structure relating to object attribute, and comparing the metadata on the gateway with information read on reader 5, it is designed to determine whether corresponding information actually exists before carrying out a search for it across company servers. Also, it allows management using metadata to know which information is in which server, enabling a simultaneous search across multiple servers.

## Claims

1. An information acquisition system comprising: information authentication gateway storing metadata that indicate the entire hierarchical structure, where basic semantic units are shown in hierarchical structure; one or more servers storing information corresponding to hierarchical position information-bearing information code attached to an object,
said information authentication gateway **characterized in that** it includes a metadata storage means that stores metadata indicating the entire hierarchical structure, where basic semantic units are shown as a hierarchical structure;
a hierarchical position information acquisition means wherein information code attached to said object is read by a reader, receiving hierarchical position information in the information code from a user terminal that can send/receive information to/from said reader;
an information comparison means verifying whether said received hierarchical position information is included in metadata stored in said metadata storage means;
a ticket issuing means passing information required to access server storing information corresponding to said hierarchical position information to said user terminal when it is included in said information comparison means;
and said server includesan information storage means that stores information corresponding to hierarchical position information included in information code attached to said object, an
information retrieval means that retrieves information corresponding to said hierarchical position information from said information storage means, based on hierarchical position information received from said user terminal, and passes it to said user terminal.

2. The information acquisition system set forth in Claim 1,
said information acquisition system **characterized in that**:
said server further comprises
a ticket receipt means that receives said ticket information from said information authentication gateway;
a ticket comparison means that determines whether it is accessible by comparing ticket information received from said user terminal with ticket information received from said information authentication gateway; and
said information retrieval means
retrieves information corresponding to said hierarchical position information from said information storage means, based on hierarchical position information received from said user terminal, and passes it to said user terminal when it determines it to be accessible in said ticket comparison means.

3. The information acquisition system set forth in Claim 2,
said information acquisition system **characterized in that**:
the information retreival means in said server also
encrypts said information and passes it to said user terminal, based on said ticket information, when information corresponding to said hierarchical position information is passed to said user terminal;
and said user terminal
decodes encrypted information received from said server, based on said ticket information.

4. The information acquisition system set forth in any of Claims 1, 2, or 3, further
**characterized in that**
when said information acquisition system receives a request from said user terminal for modification/removal/new registration of information corresponding to hierarchical position information:
said information retrieval means executes processes for modification/removal/new registration of information corresponding to said hierarchical position information and passes the result to said user terminal.

5. An information acquisition method that uses an information authentication gateway that stores metadata indicating the entire hierarchical structure where basic semantic units are shown in hierarchical structure, and one or more servers that store information corresponding to hierarchical position information contained in information code attached to an object;
said information acquisition method **characterized in that**
said information authentication gateway
receives hierarchical position information included in the information code attached to said object read by said reader, from a user terminal that can send/receive information, to/from a reader that can read information code attached to an object,
verifies whether said received hierarchical position information is include in metadata stored,
passes information required to access a server storing information corresponding to said hierarchical position information, to said user terminal when it is included;
and said server
is accessed from said user terminal, based on information of the accessed destination received from said information authentication gateway,
and passes information corresponding to said hierarchical position information to said user terminal upon receiving said hierarchical position information from said user terminal.

6. The information acquisition method set forth in Claim 5,
said information acquisition method **characterized in that**
said information authentication gateway further
verifies whether said received hierarchical position information is included in metadata stored,
generates ticket information to access server storing information corresponding to said hierarchical position information when said received hierarchical position information is included in said metadata,
forwards said generated ticket information to such server,
and forwards said generated ticket information and information required to access such server to said user terminal. Said server further
compares ticket information received from said user terminal with ticket information received from said information authentication gateway, and forwards information corresponding to hierarchical position information received from said user terminal to said user terminal if it determines it to be accessible.

7. The information acquisition method set forth in Claim 6,
said information acquisition method **characterized in that**
said server,
when passing information corresponding to hierarchical position information to said user terminal, further
encrypts said information based on said ticket information and passes it to said user terminal;
and said user terminal
decodes encrypted information received from said server, based on said ticket information.

8. The information acquisition method set forth in any of Claims 5, 6 or 7,
said information acquisition method **characterized in that**
upon receiving a request from said user terminal for modification/removal/new registration of information corresponding to hierarchical position information, said server
executes processes for modification/removal/new registration of information corresponding to said hierarchical position information and passes the result to said user terminal.

9. An information authentication gateway that can send/receive data to/from one or more servers that store information corresponding to hierarchical position information included in the information code attached to an object,
said information authentication gateway **characterized in that** it comprises:
a metadata storage means that stores metadata indicating an entire hierarchical structure where basic semantic units are shown in hierarchical structure;
a hierarchical position information acquisition means, wherein the information code attached to said object is read by a reader, receives hierarchical position information in the information code from a user terminal that can send/receive information to/from said reader;
an information comparison means that verifies whether said received hierarchical position information is included in metadata stored in said metadata storage means;
a ticket issuing means that forwards information required to access the server storing information corresponding to said hierarchical position information to said user terminal when it is included in said information comparison means, allowing said server to be accessed from said user terminal, and information corresponding to said hierarchical position information to be acquired.

10. The information authentication gateway set forth in Claim 9,
said information authentication gateway **characterized in that**:
said information comparison means
passes a request for issuing a ticket to said ticket issuing means when said received hierarchical position information is included in said metadata, and
passes error notification to said user terminal when it is not included;
and said ticket issuing means
upon receiving said request for issuing a ticket, generates ticket information to access the server storing information corresponding to said hierarchical position information, passes said ticket information to such server, passes said generated ticket information and information required to access such server to said user terminal, and allows said server to be accessed from said user terminal after authentication for said ticket information is performed and allows information corresponding to said hierarchical position information to be acquired.

11. The information authentication gateway set forth in Claim 10,
said information authentication gateway **characterized in that** it also includes
a metadata update means that accesses said server storage storing information corresponding to said hierarchical position information, detects changes in hierarchical position information in such server, and updates metadata stored in said metadata storage means.

12. The information authentication gateway set forth in any of Claims 9, 10, or 11,
**characterized in that**
upon receiving a request from said user terminal for modification/removal/new registration of information corresponding to said hierarchical position information, said information retrieval means
executes processes for modification/removal/new registration of information corresponding to said hierarchical position information, and passes the result to said user terminal.
